# EUROPEAN PATENT SPECIFICATION

(11) **EP 3 688 929 B1**
(45) Date of publication and mention of the grant of the patent: **30.03.2022**
(21) Application number: 19764323.2
(22) Date of filing: 31.05.2019
(51) Int. Cl.: H04L 9/32

(54) **SYSTEM AND METHOD FOR PROVIDING PRIVACY AND SECURITY PROTECTION IN BLOCKCHAIN-BASED PRIVATE TRANSACTIONS**
SYSTEM UND VERFAHREN ZUR BEREITSTELLUNG VON PRIVATSPHÄRE UND SICHERHEITSSCHUTZ BEI PRIVATTRANSAKTIONEN AUF BLOCKCHAIN-BASIS
SYSTÈME ET PROCÉDÉ POUR FOURNIR UNE PROTECTION DE CONFIDENTIALITÉ ET DE SÉCURITÉ DANS DES TRANSACTIONS PRIVÉES BASÉES SUR UNE CHAÎNE DE BLOCS

(43) Date of publication of application: 05.08.2020
(73) Proprietor: Advanced New Technologies Co., Ltd., George Town, Grand Cayman KY1-9008 (KY)
(72) Inventor: YANG, Dayi, Hangzhou, Zhejiang 311121 (CN); XIA, Ning, Hangzhou, Zhejiang 311121 (CN); LI, Kang, Hangzhou, Zhejiang 311121 (CN)
(74) Representative: Goddar, Heinz J.
(86) International application number: PCT/CN2019/089486
(87) International publication number: WO 2019/170167

(56) References cited:
- WO-A2-2019/072299
- WO-A2-2019/072304
- CN-A- 107 425 982
- CN-A- 107 682 364
- CN-A- 107 807 984
- CN-A- 107 911 216
- US-A1- 2016 224 949
- PRABHAKAR ANJANA ET AL: "TCON - A lightweight Trust-dependent Consensus framework for blockchain", 2019 11TH INTERNATIONAL CONFERENCE ON COMMUNICATION SYSTEMS & NETWORKS (COMSNETS), IEEE, 7 January 2019 (2019-01-07), pages 1-6, XP033548973, DOI: 10.1109/COMSNETS.2019.8711448 [retrieved on 2019-05-09]
- KUO TSUNG-TING ET AL: "Comparison of blockchain platforms: a systematic review and healthcare examples", JOURNAL OF THE AMERICAN MEDICAL INFORMATICS ASSOCIATION, vol. 26, no. 5, 25 March 2019 (2019-03-25) , pages 462-478, XP055787314, DOI: 10.1093/jamia/ocy185 Retrieved from the Internet: URL:http://academic.oup.com/jamia/article- pdf/26/5/462/34946373/ocy185.pdf> [retrieved on 2021-03-19]

## Description

### TECHNICAL FIELD

This application generally relates to methods and devices for providing privacy and security protection for blockchain-based private transactions.

### BACKGROUND

Blockchain provides data storage in a decentralized fashion, by keeping the data in a series of data blocks having precedence relationship between each other. The chain of blocks is maintained and updated by a network of nodes, which are also responsible for validating the data. The stored data may involve transactions among various parties, and the blockchain storing the data may be also referred to as a shared ledger that keeps track of these transactions.

A valid transaction usually comprises elements such as the sender (e.g., sender account address), receiver (e.g., receiver account address), and transaction amount. In traditional blockchain systems, to prevent double-spending and other fraudulent activities, these elements are explicitly made public for verification, and such transactions are known as public transactions. Without privacy protection, these public transactions are broadcast to all blockchain nodes for them to verify and execute.

Private transactions on the other hand need to hide one or more elements from non-participating parties. One existing proposal for offering privacy protection is the Quorum private transaction. In a private transaction among an initiating party and one or more participating parties, for each participating party, the sender party needs to encrypt the transaction with a symmetric key, encrypt the symmetric key with a public key of the participating party, send both encryptions to the participating party. The initiating party and participating parties conduct the private transaction through their corresponding blockchain nodes. Then, the hash of the transaction may be consensus-verified by the blockchain nodes and packed into the blockchain.

Another existing proposal for offering privacy protection is the Fabric private transaction. For a private transaction among an initiating party and one or more participating parties, the participating parties are specified through chaincode. Transaction hashes of private transactions ordered by orderer nodes are recorded on a public ledger, while transaction information of the private transactions are stored in endorsing peer nodes. The initiating party and participating parties can push private transaction information to or pull private transaction information from the endorsing peer nodes for executing the private transaction.

Existing technologies often centralize control of private transaction in a few special-purpose nodes (e.g., the initiating party's corresponding node in Quorum or the endorsing peer nodes in Fabric), and rely on the assumption that the special-purpose nodes are functioning. In this specification, functioning means non-faulty and honest, and non-functioning means faulty and/or malicious. Possible faulty and/or malicious acts may include: failure to delivery message, message delivery delay, out-of-order message delivery, delivering arbitrary messages to different nodes, violating the protocol, etc. If the special-purpose nodes act maliciously and do not inform all participating parties of the private transaction or otherwise become non-functioning, the uninformed participating parties may be prevented from conducting further transactions due to missing transaction information of the private transaction. The missing information may conflict with the representation of the private transaction recorded to the public ledger, which may indicate a completion of the private transaction involving the uninformed participating parties. Thus, for parties that wish to conduct private transactions, it is desirable to provide a blockchain-based mechanism that allows privacy-protected transactions with adequate security protection.

US 2016/0224949 A1 (Thomas et al.) discloses a technique for making a payment transaction between a payor having an associated payor computer with a ledger storage for the payor and a payee having an associated payee computer with a ledger storage for the payee in a consensus payment network having a plurality of nodes, each comprising a respective computer with ledger storage and relying on consensus determinations. The consensus payment network is of type Ripple network, which is not blockchain-based. In an example, an initiator is identified (e.g. either the payor, the payee, or an intermediary) which creates a temporary payment transaction consensus subnetwork comprising a set of validation nodes acceptable to both the payor and the payee. The set of validation nodes comprises fewer than all of said plurality of nodes in the payment network. The initiator sends a proposed payment transaction to the set of validation nodes. Each node of the set of validation nodes checks the proposed transaction. If the transaction appears valid, they conditionally apply it to the local ledger. The validation nodes conduct a validation consensus, where they broadcast to each other verifiable copies of their decisions. If a quorum of the validation nodes decides to validate the transaction, they permanently commit the transaction to their local ledger. Optionally, they may broadcast transactions and validation decisions to other node computers in the payment network.

### SUMMARY

According to aspects of the present invention there is provided a method, apparatus and media as defined in the accompanying claims. Various embodiments of the specification include, but are not limited to, systems, methods, and non-transitory computer readable media for implementing blockchain-based private transactions.

According to some embodiments, a computer-implemented method for implementing blockchain-based private transactions is performed by a first blockchain node to a private transaction, the method including: determining one or more second blockchain nodes to the private transaction according to a blockchain contract in a public blockchain; transmitting transaction information to the one or more second blockchain nodes, the transaction information comprising one or more senders of the private transaction, one or more recipients of the private transaction, and one or more transaction amounts of the private transaction; obtaining a signature from each of a number of the one or more second blockchain nodes certifying receipt of the transaction information; and in response to obtaining the number of the signatures over a threshold, storing at least a representation of the private transaction and the signatures in the public blockchain.

According to other embodiments, the blockchain contract comprises an address of each of the first and second blockchain nodes to the private transaction; and determining the one or more second blockchain nodes to the private transaction according to the blockchain contract in the public blockchain comprises: determining the one or more second blockchain nodes to the private transaction according to the address of each of the one or more second blockchain nodes to the private transaction.

According to yet other embodiments, the address of each of the first and second blockchain nodes comprises at least one of: an Internet Protocol (IP) address or a communication port number.

According to still other embodiments, the blockchain contract further comprises a public key associated with each of the first and second blockchain nodes to the private transaction; and transmitting the transaction information to the one or more second blockchain nodes comprises: for each of the one or more second blockchain nodes, encrypting the transaction information with the corresponding public key; and transmitting the encrypted transaction information to each of the one or more second blockchain nodes according to the address of each of the one or more second blockchain nodes.

According to some embodiments, the blockchain contract further comprises an identification of a group comprising each of the first and second blockchain nodes to the private transaction for notifying each of the first and second blockchain nodes of an involvement in the private transaction.

According to other embodiments, the signature from each of the number of the one or more second blockchain nodes certifying receipt of the transaction information comprises: a hash value of the transaction information encrypted with a private key associated with each of the number of the one or more second blockchain nodes.

According to some embodiments, storing at least the representation of the private transaction and the signatures in the public blockchain comprises: transmitting a third blockchain transaction comprising a transaction hash of the private transaction and the signatures to one or more blockchain nodes of the public blockchain for packing into the public blockchain, wherein the transaction hash is a hash value of at least the transaction information.

According to other embodiments, in response to obtaining the number of the signatures over a threshold, storing at least the representation of the private transaction and the signatures in the public blockchain comprises: in response to respectively obtaining signatures of all of the second blockchain nodes to the private transaction, storing at least the representation of the private transaction and the signatures in the public blockchain.

According to yet other embodiments, the method further comprises: executing the private transaction locally.

According to still other embodiments, the method further comprises: obtaining a request for the transaction information from one of the one or more second blockchain nodes that has verified the number of signatures and has not received the transaction information; and transmitting the transaction information to the one second blockchain node for the one second blockchain node to execute the private transaction locally.

According to some embodiments, before determining the one or more second blockchain nodes to the private transaction according to the blockchain contract in the public blockchain, the method further comprises: storing blockchain node information in the public blockchain, the blockchain node information comprising a public key associated with each of the first and second blockchain nodes to the private transaction and an address of each of the first and second blockchain nodes.

According to other embodiments, storing the blockchain node information in the public blockchain comprises: transmitting a first blockchain transaction comprising the blockchain contract to one or more blockchain nodes of the public blockchain for deploying the blockchain contract in the public blockchain; and transmitting one or more second blockchain transactions to one or more blockchain nodes of the public blockchain for invoking the deployed blockchain contract to store the blockchain node information in the deployed blockchain contract.

According to yet other embodiments, the deployed blockchain contract is configured to bar changes to each of the first and second blockchain nodes to the private transaction after the blockchain node information is stored in the deployed blockchain contract.

According to still other embodiments, a system for implementing blockchain-based private transactions comprising: one or more processors; and one or more computer-readable memories coupled to the one or more processors and having instructions stored thereon that are executable by the one or more processors to perform the method of any of the preceding embodiments.

According to some embodiments, an apparatus for implementing blockchain-based private transactions comprises a plurality of modules for performing the method of any of the preceding embodiments.

According to some embodiments, a non-transitory computer-readable medium has stored therein instructions that, when executed by a processor of a device, cause the device to perform the method of any of the preceding embodiments.

According to other embodiments, a system for implementing blockchain-based private transactions comprises one or more processors and one or more non-transitory computer-readable memories coupled to the one or more processors and configured with instructions executable by the one or more processors to cause the system to perform operations. The system may be associated with a first blockchain node to a private transaction. The operations may comprise: determining one or more second blockchain nodes to the private transaction according to a blockchain contract in a public blockchain; transmitting transaction information to the one or more second blockchain nodes, the transaction information comprising one or more senders of the private transaction, one or more recipients of the private transaction, and one or more transaction amounts of the private transaction; obtaining a signature from each of a number of the one or more second blockchain nodes certifying receipt of the transaction information; and in response to obtaining the number of the signatures over a threshold, storing at least a representation of the private transaction and the signatures in the public blockchain.

According to yet other embodiments, a non-transitory computer-readable storage medium for implementing blockchain-based private transactions, the storage medium configured with instructions executable by one or more processors to cause the one or more processors to perform operations. The storage medium may be associated with a first blockchain node to a private transaction. The operations may comprise: determining one or more second blockchain nodes to the private transaction according to a blockchain contract in a public blockchain; transmitting transaction information to the one or more second blockchain nodes, the transaction information comprising one or more senders of the private transaction, one or more recipients of the private transaction, and one or more transaction amounts of the private transaction; obtaining a signature from each of a number of the one or more second blockchain nodes certifying receipt of the transaction information; and in response to obtaining the number of the signatures over a threshold, storing at least a representation of the private transaction and the signatures in the public blockchain.

According to still other embodiments, an apparatus for implementing blockchain-based private transactions may be associated with a first blockchain node to a private transaction and may comprise: a determining module for determining one or more second blockchain nodes to the private transaction according to a blockchain contract in a public blockchain; a transmitting module for transmitting transaction information to the one or more second blockchain nodes, the transaction information comprising one or more senders of the private transaction, one or more recipients of the private transaction, and one or more transaction amounts of the private transaction; an obtaining module for obtaining a signature from each of a number of the one or more second blockchain nodes certifying receipt of the transaction information; and a storing module for, in response to obtaining the number of the signatures over a threshold, storing at least a representation of the private transaction and the signatures in the public blockchain.

Embodiments disclosed in the specification have one or more technical effects. In some embodiments, a representation of a private transaction is recorded to a public blockchain to ensure public notification and recognition of the occurrence of the private transaction, while transaction information of the private transaction is kept from the public blockchain to offer privacy protection. In one embodiment, transaction information (e.g., sender, receiver, and transaction amount) of the private transaction is transmitted among and accessible to parties to the private transaction or their blockchain nodes and kept from parties or their blockchain nodes that do not participate in the private transaction. In another embodiment, the validity of the private transaction can be verified by nodes of the public blockchain. Double-spending and other fraud can be prevented. In yet another embodiment, blockchain nodes of all parties conducting the private transaction are all informed and thus synchronized to the same state. In still another embodiment, a method is provided for conveniently and safely creating and managing such private transactions. In other embodiments, acknowledgement (e.g., in terms of signatures) of more than a threshold percentage of blockchain nodes of participating parties to the private transaction is required to be collected and stored to the public blockchain, preempting malicious acts by the initiating party to the private transaction. In yet other embodiments, according to group assignment, the parties involved in the private transaction can identify other parties to the private transaction, obtain their public keys to verify their signatures, and be notified of the occurrence of the private transaction when a transaction hash of the private transaction is packed into the public blockchain. Thus, security and privacy protection of private transactions are improved.

These and other features of the systems, methods, and non-transitory computer readable media disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for purposes of illustration and description only and are not intended as limiting. The invention is defined by the appended claims.

### BRIEF DESCRIPTION OF THE DRAWINGS

FIG. 1 illustrates a system for implementing blockchain-based private transactions, in accordance with some embodiments.
FIG. 2 illustrates a framework for implementing blockchain-based transactions, in accordance with some embodiments.
FIG. 3 and FIG. 4 illustrate a flowchart of a method for implementing blockchain-based transactions, in accordance with some embodiments.
FIG. 5 illustrates a flowchart of a method for implementing blockchain-based private transactions, in accordance with some embodiments.
FIG. 6 illustrates a block diagram of an apparatus for implementing blockchain-based private transactions, in accordance with some embodiments.
FIG. 7 illustrates a block diagram of a computer system in which any of the embodiments described herein may be implemented.

### DETAILED DESCRIPTION

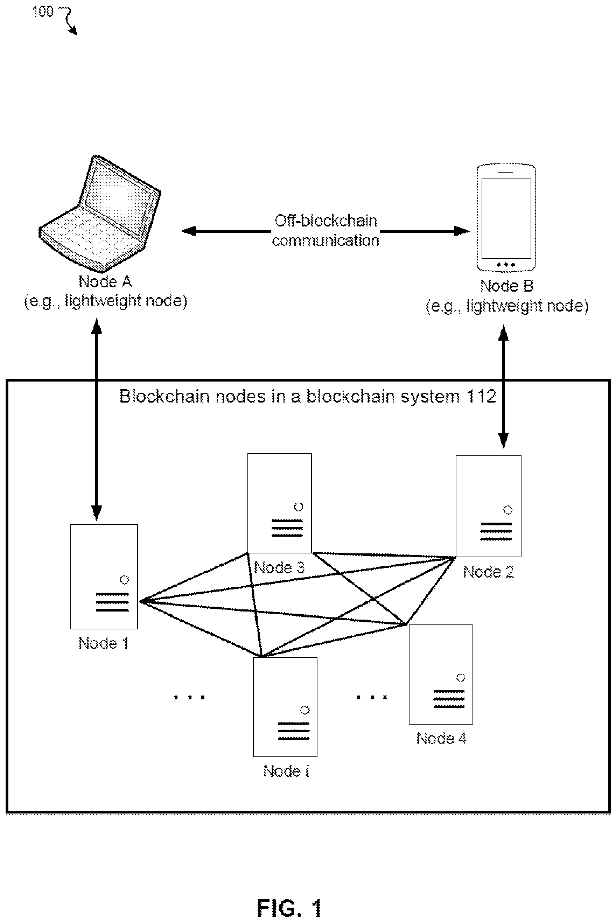

FIG. 1 shows an example of a blockchain network 100, in accordance with some embodiments. As shown, the blockchain network 100 may comprise one or more client devices (e.g., Node A, Node B, etc.) coupled to a blockchain system 112. The client devices may include lightweight nodes. A lightweight node may not download the complete blockchain, but may instead just download the block headers to validate the authenticity of the blockchain transactions. Lightweight nodes may be served by and effectively dependent on full nodes (e.g., those in the blockchain system 112) to access more functions of the blockchain. The lightweight nodes may be implemented in electronic devices such as laptops, mobile phones, and the like by installing an appropriate software.

The blockchain system 112 may comprise a plurality of blockchain nodes (e.g., Node 1, Node 2, Node 3, Node 4, Node i, etc.), which may include full nodes. Full nodes may download every block and blockchain transaction and check them against the blockchain's consensus rules. The blockchain nodes may form a network (e.g., peer-to-peer network) with one blockchain node communicating with another. The order and the number of the blockchain nodes as shown are merely examples and for the simplicity of illustration. The blockchain nodes may be implemented in servers, computers, etc. For example, the blockchain nodes may be implemented in a cluster of servers. The cluster of servers may employ load balancing. Each blockchain node may correspond to one or more physical hardware devices or virtual devices coupled together via various types of communication methods such as TCP/IP. Depending on the classifications, the blockchain nodes may also be referred to as full nodes, Geth nodes, consensus nodes, etc.

Each of the client devices and blockchain nodes may be installed with appropriate software (e.g., application program interface) and/or hardware (e.g., wires, wireless connections) to access other devices of the blockchain network 100. In general, the client devices and blockchain nodes may be able to communicate with one another through one or more wired or wireless networks (e.g., the Internet) through which data can be communicated. Each of the client devices and blockchain nodes may include one or more processors and one or more memories coupled to the one or more processors. The memories may be non-transitory and computer-readable and be configured with instructions executable by one or more processors to cause the one or more processors to perform operations described herein. The instructions may be stored in the memories or downloaded over a communications network without necessarily being stored in the memories. Although the client devices and blockchain nodes are shown as separate components in this figure, it will be appreciated that these systems and devices can be implemented as single devices or multiple devices coupled together. That is, a client device (e.g., Node A) may be alternatively integrated into a blockchain node (e.g., Node 1).

The client devices such as Node A and Node B may be installed with an appropriate blockchain software to initiate, forward, or access blockchain transactions. Node A may access the blockchain through communications with Node 1 or one or more other blockchain nodes, and Node B may access the blockchain through communications with Node 2 or one or more other blockchain nodes. Off the blockchain, Node A and Node B may have other channels of communication (e.g., regular internet communication without going through Node 1 and Node 2). In some embodiments, Node A may submit a blockchain transaction to the blockchain through Node 1 or similar nodes to request adding the blockchain transaction to the blockchain.

In one embodiment, the submitted blockchain transaction may comprise a financial transaction between various parties. In another embodiment, the submitted blockchain transaction may comprise a data update event that updates the data store. For example, the submitted blockchain transaction may comprise a blockchain contract (e.g., smart contract) for deployment on the blockchain. For another example, the submitted blockchain transaction may comprise a request to invoke a deployed blockchain contract. In this specification, the term "blockchain transaction" may be implemented via a blockchain system and recorded to the blockchain. The blockchain transaction may include, for example, a financial transaction, a blockchain contract transaction for deploying or invoking a blockchain contract, a blockchain transaction that updates a state (e.g., world state) of the blockchain, etc. The blockchain transaction does not have to involve a financial exchange. The financial transaction may be blockchain-based and may be a private or public transaction. Thus, private transactions, public transactions, and related terms (such as transaction amounts, transaction information, etc.) may refer to corresponding financial transactions.

The blockchain contracts may include contractual terms between users written in lines of code. The blockchain contract may be a computer protocol intended to digitally facilitate, verify, or enforce the negotiation or performance of a contract. In some embodiments, to handle the blockchain contracts, each node of the blockchain network runs a corresponding virtual machine (VM) and executes the same instructions. A VM is a software emulation of a computer system based on computer architectures and provide functionality of a physical computer. VM in the blockchain context can be understood us a system designed to operate as a runtime environment for blockchain contracts.

The blockchain may be maintained by the blockchain nodes each comprising or coupling to a memory. In some embodiments, the memory may store a pool database. The pool database may be accessible to the plurality of blockchain nodes in a distributed manner. For example, the pool database may be respectively stored in the memories of the blockchain nodes. The pool database may store a plurality of blockchain transactions submitted by the one or more client devices similar to Node A.

In some embodiments, after receiving a blockchain transaction request of an unconfirmed blockchain transaction, the recipient blockchain node may perform some preliminary verification of the blockchain transaction. For example, Node 1 may perform the preliminary verification after receiving the blockchain transaction from Node A. Once verified, the blockchain transaction may be stored in the pool database of the recipient blockchain node (e.g., Node 1), which may also forward the blockchain transaction to one or more other blockchain nodes (e.g., Node 3, Node 4). The one or more other blockchain nodes may repeat the process done by the recipient node.

Once the blockchain transactions in the corresponding pool database reach a certain level (e.g., a threshold amount), the blockchain nodes may each verify the batch of blockchain transactions in the corresponding pool database according to consensus rules or other rules. If the blockchain transaction involves a blockchain contract (e.g., smart contract), the blockchain node may execute the blockchain contract locally. The blockchain contract may include user-written contract code. An example of a blockchain transaction may encode data in contract code for data storage (by contract deployment) and retrieval (by accessing or executing contract).

A certain blockchain node that successfully verifies its batch of blockchain transactions in accordance with consensus rules may pack the blockchain transactions into its local copy of the blockchain and multicast the results to other blockchain nodes. The certain blockchain node may be a blockchain node that has first successfully completed the verification, that has obtained the verification privilege, or that has been determined based on another consensus rule, etc. Then, the other blockchain nodes may execute the blockchain transactions locally, verify the execution results with one another (e.g., by performing hash calculations), and synchronize their copies of the blockchain with that of the certain blockchain node. By updating their local copies of the blockchain, the other blockchain nodes may similarly write such information in the blockchain transaction into respective local memories. As such, the blockchain contract can be deployed on the blockchain. If the verification fails at some point, the blockchain transaction is rejected.

The deployed blockchain contract may have an address, according to which the deployed contract can be accessed. A blockchain node may invoke the deployed blockchain contract by inputting certain parameters to the blockchain contract. In one embodiment, Node B may request to invoke the deployed blockchain contract to perform various operations. For example, data stored in the deployed blockchain contract may be retrieved. For another example, data may be added to the deployed blockchain contract. For yet another example, a financial transaction specified in the deployed blockchain contract may be executed. Notwithstanding the above, other types of blockchain systems and associated consensus rules may be applied to the disclosed blockchain system.

In some embodiments, the blockchain system 112 comprises blockchain nodes maintaining a public blockchain. In one embodiment, a public transaction submitted to the blockchain system 112 for adding to the public blockchain is visible to all blockchain nodes for verification and execution. In another embodiment, a private transaction may only involve a number of the blockchain nodes representing the parties to the private transaction. For such private transaction, though a representation of the private transaction may still be submitted like the public transaction for adding to the public blockchain, transaction information of the private transaction may be kept away from non-participating parties and their blockchain nodes. In that case, the transaction information of the private transaction may be transmitted among a limited number of blockchain nodes (e.g., blockchain nodes of the parties to the private transaction). That is, unlike public transactions, a private transaction may keep at least a portion of its transaction information (e.g., the sender, receiver, and transaction information) known to parties of the transactions for these parties' corresponding blockchain nodes to verify and execute, without broadcasting to non-participating parties. The public blockchain as visible to all blockchain nodes may record a proof of the private transaction such as a transaction hash of the private transaction and an encryption of the transaction information, but not explicitly storing at least the portion of the transaction information. The transaction hash is a hash value which may be the numeric result of applying a hash algorithm to the data of the transactions (e.g., transaction information). For example, a transaction hash of a private transaction between Node 1 and Node 2 may be recorded to a public blockchain and visible to Node 1, Node 2, Node 3, Node 4, and so on, while transaction information of the private transaction may be only known to Node 1 and Node 2. To that end, Node 1 and Node 2 may communicate off the blockchain and keep the transaction information of the private transaction private, or communicate on the blockchain but only allow visibility to certain nodes (e.g., through public-private key encryption).

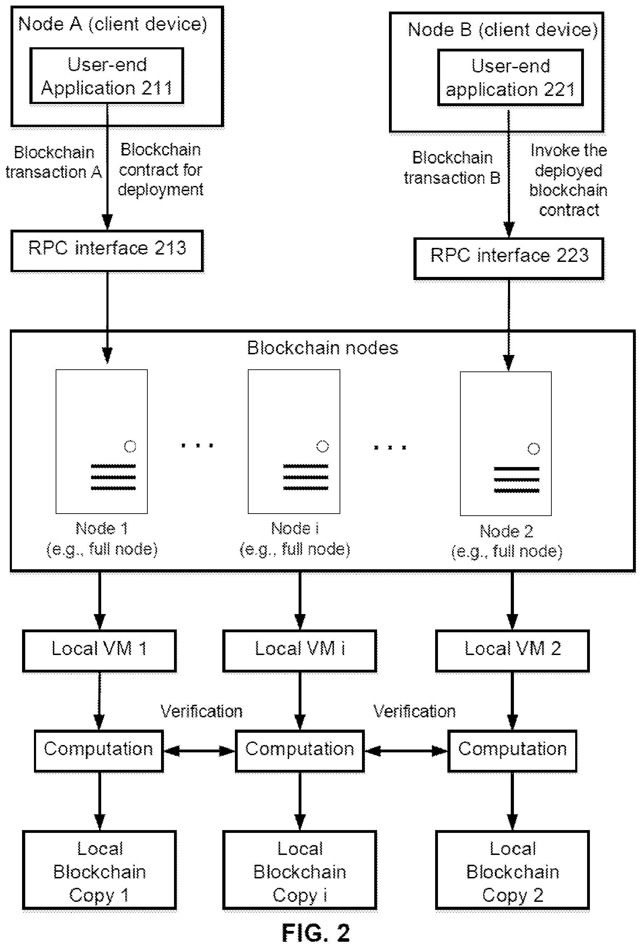

FIG. 2 illustrates a framework for implementing blockchain contracts, in accordance with some embodiments. The description with respect to FIG. 2 below will be directed to deploying and invoking a publicly accessible blockchain contract on a public blockchain. For example, information (e.g., on parties to a private transaction, a transaction hash of a private transaction) that needs to be publicly verifiable and stored based on consensus may be included in a blockchain contract for storing in a public blockchain.

In some embodiments, a blockchain contract may start with its construction in source code. For example, a user A may program a blockchain contract in source code and input the source code to an interface of a user-end application 211. In this figure, the user-end application 211 is installed in Node A. To deploy the blockchain contract, Node A may compile the blockchain contract source code using a corresponding compiler, which converts the source code into bytecode. After receiving the bytecode, the user-end application may generate a blockchain transaction A including the bytecode and submit the blockchain transaction A to one or more of the blockchain nodes. For example, the blockchain transaction A may comprise information such as nonce (e.g., transaction serial number), from (e.g., an address of user A's account), to (e.g., empty if deploying a blockchain contract), GasLimit (e.g., an upper limit of transaction fee consumed for the transaction), GasPrice (e.g., a transaction fee offered by the sender), value (e.g., transaction amount), data (e.g., the bytecode), etc. Node A may sign the blockchain transaction A with various encryption methods to represent endorsement by Node A. Node A may send the blockchain transaction A to a blockchain node (e.g., Node 1) through a remote procedure call (RPC) interface 213. RPC is a protocol that a first program (e.g., user-end application) can use to request a service from a second program located in another computer on a network (e.g., blockchain node) without having to understand the network's details. When the first program causes a procedure to execute in a different address space (e.g., on Node 1), it is as if a normal (local) procedure call, without the programmer explicitly coding the details for the remote interaction.

On receiving the blockchain transaction A, as described earlier, Node 1 may verify if the blockchain transaction A is valid. For example, the signature of Node A and other formats may be verified. If the verification succeeds, Node 1 may broadcast the blockchain transaction A to the blockchain network including various other blockchain nodes. Some blockchain nodes may participate in the mining process of the blockchain transactions. The blockchain transaction A may be picked by a certain node for consensus verification to pack into a new block. The certain node may create a contract account for the blockchain contract in association with a contract account address. The certain node may trigger its local VM to execute the blockchain contract, thereby deploying the blockchain contract to its local copy of the blockchain and updating the account states in the blockchain. If the certain node succeeds in mining the new block, the certain node may broadcast the new block to other blockchain nodes. The other blockchain nodes may verify the new block as mined by the certain blockchain node. If consensus is reached, the blockchain transaction A is respectively packed to the local copies of the blockchain maintained by the blockchain nodes. The blockchain nodes may similarly trigger their local VMs (e.g., local VM 1, local VM i, local VM 2) to execute the blockchain contract, thus invoking the blockchain contract deployed on the local copies of the blockchain (e.g., local blockchain copy 1, local blockchain copy i, local blockchain copy 2) and making corresponding updates. The hardware machine of each blockchain node may have access to one or more virtual machines, which may be a part of or couple to the corresponding blockchain node. Each time, a corresponding local VM may be triggered to execute the blockchain contract in the blockchain transaction A. Likewise, all other blockchain transactions in the new block will be executed. Lightweight nodes may also synchronize to the updated blockchain.

When a blockchain node would like to perform an operation (e.g., adding data, accepting an offer) to the deployed blockchain contract, the blockchain node may need to invoke the blockchain contract. In some embodiments, a user B may program an instruction to invoke a blockchain contract in source code and input the source code to an interface of a user-end application 221. To invoke the blockchain contract, Node B may compile the instruction using a corresponding compiler, which converts the source code into bytecode. After receiving the bytecode, the user-end application may generate a blockchain transaction B including the bytecode and submit the blockchain transaction B to one or more of the blockchain nodes. Similarly, the blockchain transaction B may comprise information such as nonce (e.g., transaction serial number), from (e.g., an address of user B's account), to (e.g., an address of the deployed blockchain contract), GasLimit (e.g., an upper limit of transaction fee consumed for the transaction), GasPrice (e.g., a transaction fee offered by the sender), value (e.g., transaction amount), data (e.g., the bytecode), etc. Node B may sign the blockchain transaction B with various encryption methods to represent endorsement by Node B. Node B may send the blockchain transaction B to a blockchain node (e.g., Node 2) through a remote procedure call (RPC) interface 223.

On receiving the blockchain transaction B, Node 2 may verify if the blockchain transaction B is valid. For example, the signature of Node B and other formats may be verified. If the verification succeeds, Node 2 may broadcast the blockchain transaction B to the blockchain network including various other blockchain nodes. The blockchain transaction B sent by Node B may be picked by a certain node for consensus verification to pack into a new block. The certain node may trigger its local VM to execute the blockchain contract, thereby invoking the blockchain contract deployed on its local copy of the blockchain and updating the account states in the blockchain. If the certain node succeeds in mining the new block, the certain node may broadcast the new block to other blockchain nodes. The other blockchain nodes may verify the new block as mined by the certain blockchain node. If consensus is reached, the blockchain transaction B is respectively packed to the local copies of the blockchain maintained by the blockchain nodes. The blockchain nodes may similarly trigger their local VMs to execute the blockchain contract, thus invoking the blockchain contract deployed on the local copies of the blockchain and making corresponding updates. The hardware machine of each blockchain node may have access to one or more virtual machines, which may be a part of or couple to the corresponding blockchain node. Each time, a corresponding local VM may be triggered to execute the blockchain contract in the blockchain transaction B. Likewise, all other blockchain transactions in the new block will be executed. Lightweight nodes may also synchronize to the updated blockchain.

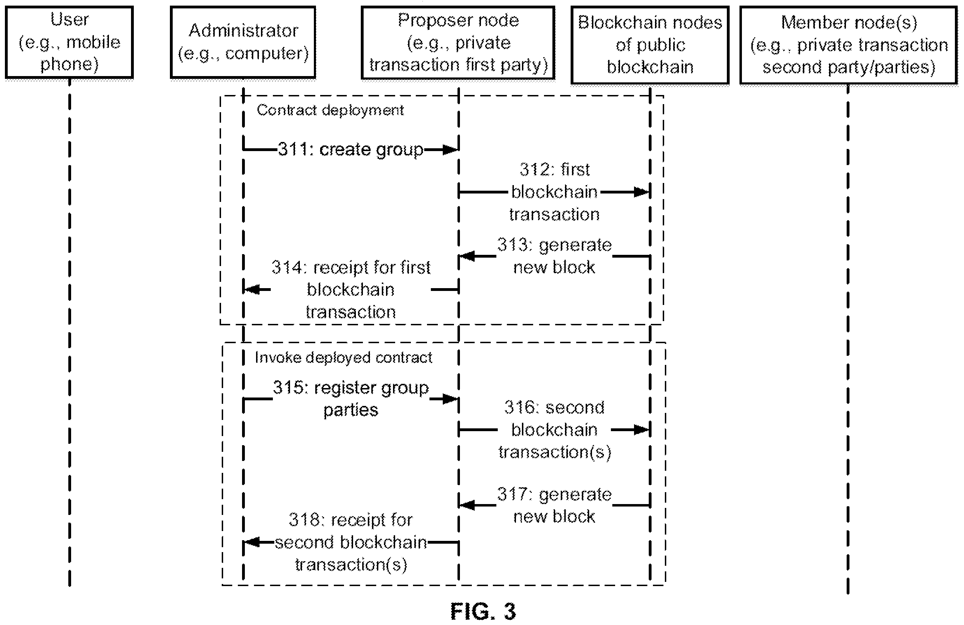

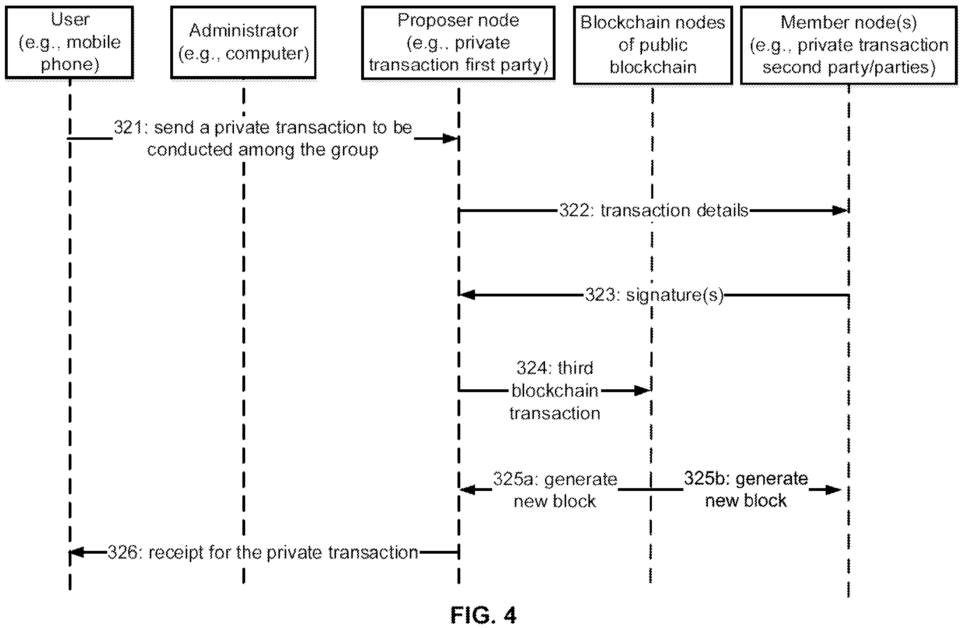

FIG. 3 and FIG. 4 illustrate a flowchart of a method for implementing blockchain-based transactions, in accordance with some embodiments. The operations of the method presented below are intended to be illustrative. Depending on the implementation, the method may include additional, fewer, or alternative steps performed in various orders or in parallel.

Various entities relevant to the method and shown in the top blocks in FIG. 3 and FIG. 4 are first introduced. In some embodiments, a private transaction may involve a number of parties. Each party to a private transaction may have one or more corresponding blockchain nodes to implement the private transaction. For example, one party may transfer a payment to one or more other parties. A party may be, but is not limited, a person, an entity, an account, or the like. The private transaction may involve one or more proposer nodes and one or more member nodes. The proposer and member nodes may be blockchain nodes.

The proposer node may represent a first blockchain node. The first blockchain node may belong to a first party (private transaction first party). The first party is one of the parties that is aware of the transaction information, which may include information of the sender (e.g., sender account address), receiver (e.g., receiver account address), and transaction amount. The first party can be a party that initiates the private transaction, a sender or receiver party to the private transaction, etc. Private transactions may need to hide one or more elements of the transaction information from non-participating parties. The first party may use an account that can be accessed from a device (e.g., mobile phone, computer) to order the private transaction. The device may constitute a lightweight node or a full node.

The member node may represent a second blockchain node. The second blockchain node may belong to a second party (private transaction second party). The second part(ies) shown may represent a portion or all of the parties to the private transaction other than the first party.

The "blockchain nodes of public blockchain" in the top blocks shown in FIG. 3 and FIG. 4 may refer to blockchain nodes that maintain a public blockchain. The public blockchain is accessible for all blockchain nodes to verify and access stored information, such as executing recorded transactions or blockchain contracts. The proposer node and member nodes can be such blockchain nodes of the public blockchain that have access to the public blockchain and also participate in the private transaction, whereas other blockchain nodes, though have access to the public blockchain, do not participate in the private transaction.

The administrator may represent a designated role that is in charge of creating a group of parties (e.g., the first and second parties) through the blockchain contract described herein. Anyone (e.g., the user described above or another user) can become the administrator. After the group is created, the proposer and member nodes associated with the parties may conduct the private transaction. The administrator may use an account that can be accessed from a device (e.g., a computer) to order blockchain contract deployment and calling. The device may constitute a lightweight node or a full node.

Referring to FIG. 3, in some embodiments with respect to blockchain contract deployment, at step 311, the administrator (e.g., Node A) may transmit a first transaction for deploying a blockchain contract to the proposer node (e.g., Node 1). The blockchain contract may be for storing (1) an identification of a group comprising each of the first and second blockchain nodes (associated with the corresponding party) to the private transaction, (2) public keys of the group members, and/or (3) addresses (e.g., IP address and port number) of the group members. At step 312, the proposer node may broadcast the first transaction in the public blockchain network for deploying the blockchain contract in the public blockchain. At step 313, through consensus verification, the blockchain nodes of the public blockchain successfully deploy the blockchain contract, for example, in the creation of a new block to the public blockchain. Details of the consensus verification can be referred to FIG. 1 and FIG. 2 described above. At step 314, the administrator receives a receipt for the successful deployment.

In some embodiments with respect to blockchain contract calling, at step 315, the administrator may transmit one or more second transactions for invoking the deployed blockchain contract to the proposer node. The second transaction may be for adding data (e.g., the identification of a group comprising each proposer or member node (associated with the corresponding party) to the private transaction, the public keys of the group members, and/or the addresses of the group members) to the deployed blockchain contract. Each second transaction may add information of the proposer and member nodes (associated with the corresponding parties) to the private transaction. Thus, a private transaction conducted among a group and stored to the public blockchain may show the corresponding identification of the group (see step 324, 325a, and 325b below), so that the group members (e.g., the proposer and member nodes associated with the parties to the private transaction) will be notified to obtain transaction information of the private transaction and execute the private transaction. The public keys and addresses will be publicly available for facilitating communications among the proposer and member nodes to the private transaction as described below. At step 316, the proposer node may broadcast each of the second transactions in the public blockchain network for invoking the blockchain contract in the public blockchain to add the data. At step 317, through consensus verification, the blockchain nodes of the public blockchain successfully add the data to the deployed blockchain contract, for example, with the creation of a new block to the public blockchain. Details of the blockchain contract calling can be referred to FIG. 1 and FIG. 2 described above. At step 318, the administrator receives a receipt for the successful addition.

In some embodiments, the blockchain contract may be configured to prevent changes to the data added to the deployed blockchain contract. For example, only the administrator is allowed to add the data, and other accounts are barred from altering the blockchain contract. Since the new blocks in the public blockchain are accessible to all blockchain nodes of the public blockchain, the administrator is effectively watched by the blockchain nodes, which may deter the administrator from acting maliciously. If the administrator delays the blockchain contract deployment or calling, the administrator can be replaced. The steps 311 to 318 may be referred to as a bootstrap process.

Referring to FIG. 4, though the figure shows the proposer node initiating the private transaction, the private transaction may be initiated by any blockchain node to the private transaction. In some embodiments, at step 321, the user may send to the proposer node a private transaction (e.g., transaction information) to be conducted by the group members. In one embodiment, the private transaction received by the proposer node may comprise the identification of the group for executing the private transaction. In another embodiment, the proposer node may identify the group for executing the private transaction from a plurality of groups whose group identifications are available from the blockchain. The private transaction to be executed by a particular group is kept private from members of other groups (except for overlapping members). The proposer node may choose a group comprising the sender(s) and/or recipient(s) to the private transaction to execute the private transaction. In one example, the proposer node is involved in three different groups: group 1 including itself and nodes M and N, group 2 including itself and nodes M, N, and P, and group 3 including itself and nodes M and P. For a private transaction among the proposer node and nodes M and N, the proposer node may choose group 1 if it wants to minimize the number of participants, or may choose group 2 if it does not mind having node P to know about the private transaction or needs node P to be a verifier (described below). The proposer node may not choose group 3 because it does not comprise node N. If there is no appropriate group available according to the blockchain, the proposer node may create a group for executing the private transaction as described above.

At step 322, the proposer node may determine one or more member nodes to the private transaction according to the blockchain contract in the public blockchain and transmit the transaction information to one or more member nodes. For example, the proposer node may obtain the addresses of the member nodes from the blockchain contract to transmit the transaction information. The transaction information may comprise one or more senders of the private transaction, one or more recipients of the private transaction, one or more corresponding transaction amounts of the private transaction, and optionally one or more verifiers of the private transaction. The verifier may or may not be one of the senders or recipients. For example, the transaction information may comprise sender A sending $5, sender B sending $4, recipient C receiving $1, recipient D receiving $9, and verifier E verifying the transaction without sending or receipt any money. For another example, the transaction information may comprise sender A sending $5, sender B sending $4, recipient C receiving $1, and recipient D receiving $9, and A, B, C, and D are also verifiers. For another example, the transaction information may comprise sender A sending $2 each to recipients B, C, and D.

On receiving the transaction information, each of the member nodes (e.g., a verifier who may or may not also be a sender or recipient) may verify if the transaction information is correct. The member node may compute a representation (e.g., hash value) of the transaction information. The hash value may be referred to as a transaction hash. Additionally and optionally, the transaction information may further comprise a transaction hash known to the proposer node, so that the member node can may compare the self-computed hash value against the transaction hash known to the proposer node to verify. Either way, if the transaction information is verified, the member node may sign the transaction hash (e.g., by encrypting the transaction hash using its private key) and transmit the signature (e.g., the transaction hash encrypted using its private key) to the proposer node. The signature represents that the member node confirms the transaction information. The proposer node also sign the transaction hash with its own signature to confirm the transaction information. At step 323, the proposer node may try to obtain the signature from each of a number of the member nodes, the signature certifying receipt of the transaction information. The proposer node may obtain the signature from each of all of the member nodes or from each of some of the member nodes.

At step 324, the proposer node may, in response to obtaining the number of the signatures over a threshold, storing in the public blockchain at least a representation of the private transaction, the signatures, and the identification of the group comprising the each blockchain node to the private transaction. The threshold can be a pre-configured value, such as 50% or all participating blockchain nodes. The threshold can be increased to improve the level of safety by requiring more participating blockchain nodes to the private transaction to confirm the transaction information. In one embodiment, the proposer node may broadcast a third transaction comprising the transaction hash of the private transaction and the signatures in the public blockchain network for packing into the public blockchain. For example, the proposer node may concatenate the transaction hash and the signatures to add to the third transaction. In one embodiment, the private transaction cannot be packed into the public blockchain until the threshold condition is satisfied. At step 325a and step 325b, through consensus verification, the blockchain nodes of the public blockchain may pack the private transaction into a new block of the public transaction. The proposer node and the member nodes, as a part the blockchain nodes of the public blockchain, may also see the new block. At step 326, the user receives a receipt for the successful execution of the private transaction.

In some embodiments, by periodically synchronizing to the public blockchain, the proposer node and the member nodes may become aware of the private transaction (represented by its transaction hash) stored in the public blockchain. The proposer node and the member nodes may obtain the group identification associated with the transaction hash and realize that it is a group they belong to and thus the private transaction may involve themselves. Accordingly, the proposer node and the member nodes may verify the private transaction packed in the public blockchain. For example, the number of signatures may have to meet the threshold condition. If the verification succeeds, the proposer node may locally execute the private transaction according to the transaction information. If the verification succeeds, the member nodes may check if the transaction information has been received. If received, the member nodes may locally execute the private transaction according to the transaction information. In one example, the local database of the proposer or member node may update account information according to the transaction information to execute the private transaction. The local databases may be kept secret from the public. If not received, the member nodes may transmit a request for the transaction information to the proposer node, so that the proposer node can transmit the transaction information to the member nodes for the member nodes to execute the private transaction locally.

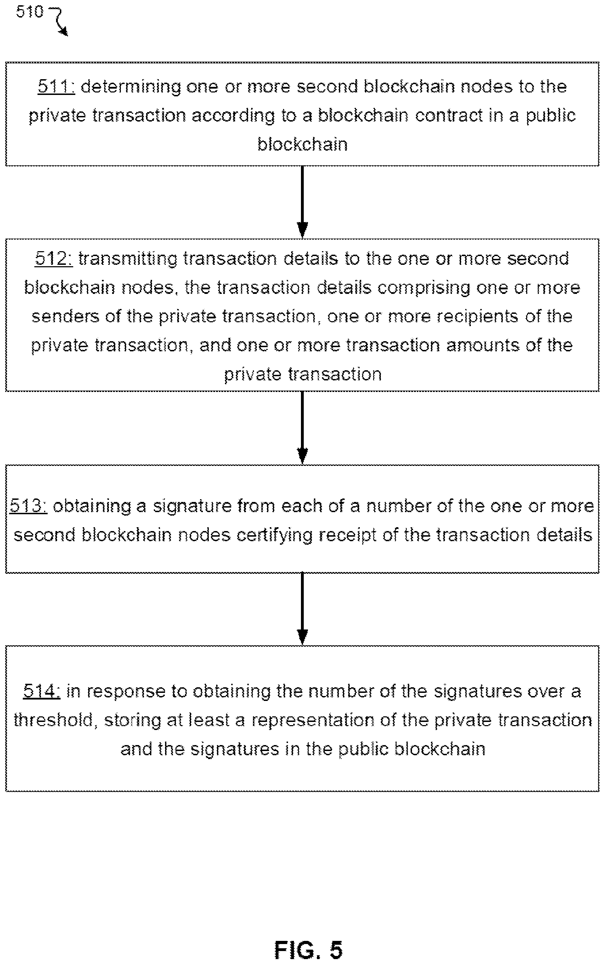

FIG. 5 illustrates a flowchart of an exemplary method 510 for implementing blockchain-based private transactions, according to some embodiments of this specification. The method 510 may be implemented by one or more components of the system 100 of FIG. 1 (e.g., Node 1, Node 2, ... , or Node i described above or a similar device, or a combination of any of the nodes and one or more additional devices such as Node A). The method 510 may be implemented by a system or device (e.g., computer, server) comprising various hardware machine and/or software. For example, the system or device may comprise one or more processors and one or more non-transitory computer-readable storage media (e.g., one or more memories) coupled to the one or more processors and configured with instructions executable by the one or more processors to cause the system or device (e.g., the processor) to perform the method 510. The operations of method 510 presented below are intended to be illustrative. Depending on the implementation, the method 510 may include additional, fewer, or alternative steps performed in various orders or in parallel. Further details of the method 510 can be referred to FIG. 1 to FIG. 4 and related descriptions above.

In some embodiments, the method 510 is performed by first blockchain node (e.g., a blockchain node of a first party) to a private transaction. The first blockchain node may correspond to the proposer node described above. The first party may be a party that initiates the transaction, a sender or receiver party to the transaction, etc. The private transaction also involves one or more second blockchain nodes (e.g., blockchain nodes of second parties). In some embodiments, the private transaction may involve only the first and second blockchain nodes. When a step is described as performed by the first or second party, a person of ordinary skill in the art will understand that the step may be performed by a blockchain node associated with the corresponding party. The first party and the second party may belong to the same entity or different entities. The first and the second blockchain nodes may belong to the same party or different parties. In some embodiments, the party may be a sender and/or a receiver (of an asset, a token, etc.) to the private transaction. That is, for the private transaction, a party may send something to and/or receive something from another party to the private transaction. Notwithstanding, a party may be an observer and does not send and/or receive anything from the private transaction.

In some embodiments, some steps may be performed before the step in block 511 for deploying a blockchain contract in a public blockchain and adding information of the various blockchain nodes (associated with various parties) to the private transaction. In one embodiment, before determining the one or more second blockchain nodes to the private transaction according to the blockchain contract in the public blockchain (block 511), the method further comprises: storing blockchain node information in the public blockchain, the blockchain node information comprising a public key associated with each of the first and second blockchain nodes (e.g., a public key of each party) to the private transaction and an address of each of the first and second blockchain nodes (e.g., an address of the each party).

In some embodiments, storing the blockchain node information in the public blockchain comprises: transmitting a first blockchain transaction comprising the blockchain contract to one or more blockchain nodes of the public blockchain for deploying the blockchain contract in the public blockchain; and transmitting one or more second blockchain transactions to one or more blockchain nodes of the public blockchain for invoking the deployed blockchain contract to store the blockchain node information in the deployed blockchain contract. The second blockchain nodes may correspond to the member nodes described above. In one embodiment, the deployed blockchain contract is configured to bar changes to each of the first and second blockchain nodes to the private transaction after the blockchain node information is stored in the deployed blockchain contract. For example, once the blockchain node information is stored to the deployed blockchain contract, the corresponding blockchain nodes (and the corresponding parties) to the private transaction cannot be changed.

Block 511 includes determining one or more second blockchain nodes to the private transaction according to a blockchain contract in a public blockchain. In one embodiment, the blockchain contract comprises an address of each of the first and second blockchain nodes to the private transaction; and determining the one or more second blockchain nodes to the private transaction (e.g., blockchain nodes of other parties to the private transaction, such as blockchain nodes of the second parties) according to the blockchain contract in the public blockchain comprises: determining the one or more second blockchain nodes to the private transaction according to the address of each of the one or more second blockchain nodes to the private transaction. For example, each party to the private transaction may be associated with a blockchain node, and the blockchain node's address may be used to identify the corresponding party. As described above, a blockchain node to the private transaction or its associated party to the private transaction may refer to a blockchain node or party directly involved in the private transaction as a sender or recipient, or indirectly involved in the private transaction only as a verifier. The verifier may verify the private blockchain. The sender may be a sender who does not verify the private transaction or a sender-verifier who also verifies the private transaction. The recipient may be a recipient who does not verify the private transaction or a recipient-verifier who also verifies the private transaction. A blockchain node or party indirectly involved in the private transaction only as a verifier may not simultaneously be a sender or receiver. In some embodiments, the blockchain contract comprises an address of each of all blockchain nodes to the private transaction. In one example, the private transaction involves only a first blockchain node and one or more second blockchain nodes. The first blockchain node may initiate a financial transaction to the one or more second blockchain nodes.

In one embodiment, the address of each of the first and second blockchain nodes comprises an Internet Protocol (IP) address and/or a communication port number. IP address (e.g., 192.168.1.1) is the address of a system in the network (e.g., the corresponding blockchain node in the blockchain network), and port number (e.g., 8080) is the address of the service within the system (e.g., a blockchain software or protocol used by the blockchain node). Thus, the combination of the IP address and port number can define the address of the particular service on the particular system.

In another embodiment, the blockchain contract further comprises an identification of a group comprising each of the first and second blockchain nodes to the private transaction for notifying each of the first and second blockchain nodes of an involvement in the private transaction. For example, an identification of 1234 or "group X" may be assigned to a group of blockchain nodes involved in one or more private transactions. With the deployment of the blockchain contract and addition of the information of the first and second blockchain nodes to the blockchain contract, the participating blockchain nodes will be notified to obtain transaction information and execute the private transaction. Thus, the private transaction is kept private from other groups that are not involved in the private transaction.

Block 512 includes transmitting transaction information to the one or more second blockchain nodes, the transaction information comprising one or more senders of the private transaction, one or more recipients of the private transaction, and one or more transaction amounts of the private transaction. In some embodiments, the blockchain contract further comprises a public key associated with each of the first and second blockchain nodes (e.g., a public key of the each first or party) to the private transaction; and transmitting the transaction information to the one or more second blockchain nodes comprises: for each of the one or more second blockchain nodes, encrypting the transaction information with the corresponding public key; and transmitting the encrypted transaction information to each of the one or more second blockchain nodes according to the address of each of the one or more second blockchain nodes. By encrypting the transaction information with the recipient's public key, only the recipient can decrypt the encryption with its private key, as long as it keeps the private key as a secret.

In some embodiments, the transaction information comprises the one or more senders of the private transaction, the one or more recipients of the private transaction, the one or more transaction amounts of the private transaction, and one or more verifiers of the private transaction, wherein none of the one or more verifiers is one of the senders or recipients. As described above, the senders and recipients may also be verifiers. Optionally and additionally, one or more verifiers may be included in the group to verify the private transaction, but not also acting as senders nor recipients.

Block 513 includes obtaining a signature from each of a number of the one or more second blockchain nodes certifying receipt of the transaction information. The signature may be obtained from each of some or all of the second blockchain nodes. The number may constitute a threshold number or threshold percentage. The signature may certify receipt of the transaction information. In some embodiments, the signature from each of the number of the one or more second blockchain nodes certifying receipt of the transaction information comprises: a hash value of the transaction information encrypted with a private key associated with each of the number of the one or more second blockchain nodes (e.g., a private key of the each of the one or more second parties). For verification, the encryption with the private key of the recipient can be decrypted with the recipient's public key is available from the deployed blockchain contract to obtain the hash value of the transaction information. Then, the hash value of the transaction information can be compared with the transaction hash (described below) of the private transaction. If the comparison yields a consistent result, the signature is valid.

Block 514 includes, in response to obtaining the number of the signatures over a threshold, storing at least a representation of the private transaction and the signatures in the public blockchain. The threshold can be a preconfigured value, such as 50% of participating parties, 80% participating parties, or all participating parties. In other embodiments, in response to obtaining the number of the signatures over a threshold, storing at least the representation of the private transaction and the signatures in the public blockchain comprises: in response to respectively obtaining signatures of all of the second blockchain nodes (e.g., blockchain nodes of all of the second parties) to the private transaction, storing at least the representation of the private transaction and the signatures in the public blockchain.

In some embodiments, storing at least the representation of the private transaction and the signatures in the public blockchain comprises: transmitting a third blockchain transaction comprising a transaction hash of the private transaction and the signatures to one or more blockchain nodes of the public blockchain for packing into the public blockchain, wherein the transaction hash is a hash value of at least the transaction information. The first, second, and third blockchain transactions may be transmitted to the same or different blockchain nodes of the public blockchain.

In some embodiments, the method further comprises: executing the private transaction locally. Other blockchain nodes to the private transaction may similarly attempt to execute the private transaction locally. If the transaction information has not been obtained, a request may be sent to the first blockchain node. In other embodiments, the method further comprises: obtaining a request for the transaction information from one of the one or more second blockchain nodes that has verified the number of signatures and has not received the transaction information; and transmitting the transaction information to one second blockchain node for the one second blockchain node to execute the private transaction locally.

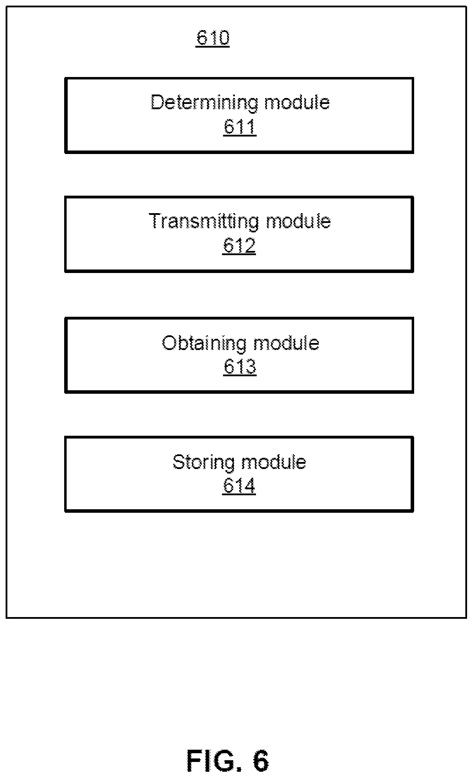

FIG. 6 illustrates a block diagram of a system 610 for implementing blockchain-based private transactions, in accordance with some embodiments. The system 610 (e.g., a computer system) may be an example of an implementation of Node 1, Node 2, Node 3, ... , or Node i described above or a similar device, or a combination of any of the nodes and an additional device (e.g., Node A). For example, the method 510 may be implemented by the system 610. The system 610 may comprise one or more processors and one or more non-transitory computer-readable storage media (e.g., one or more memories) coupled to the one or more processors and configured with instructions executable by the one or more processors to cause the system or device (e.g., the processor) to perform the methods and operations described above, e.g., the method 510. The system 610 may comprise various units/modules corresponding to the instructions (e.g., software instructions).

In some embodiments, the system 610 may be referred to as an apparatus for implementing blockchain-based private transactions. The apparatus may correspond to first blockchain node to a private transaction. The apparatus may comprise a determining module 611 for determining one or more second blockchain nodes to the private transaction according to a blockchain contract in a public blockchain; a transmitting module 612 for transmitting transaction information to the one or more second blockchain nodes, the transaction information comprising one or more senders of the private transaction, one or more recipients of the private transaction, and one or more transaction amounts of the private transaction; an obtaining module 613 for obtaining a signature from each of a number of the one or more second blockchain nodes certifying receipt of the transaction information; and a storing module 614 for, in response to obtaining the number of the signatures over a threshold, storing at least a representation of the private transaction and the signatures in the public blockchain.

The techniques described herein are implemented by one or more special-purpose computing devices. The special-purpose computing devices may be desktop computer systems, server computer systems, portable computer systems, handheld devices, networking devices or any other device or combination of devices that incorporate hard-wired and/or program logic to implement the techniques. The special-purpose computing devices may be implemented as personal computers, laptops, cellular phones, camera phones, smart phones, personal digital assistants, media players, navigation devices, email devices, game consoles, tablet computers, wearable devices, or a combination thereof. Computing device(s) are generally controlled and coordinated by operating system software. Conventional operating systems control and schedule computer processes for execution, perform memory management, provide file system, networking, I/O services, and provide a user interface functionality, such as a graphical user interface ("GUI"), among other things. The various systems, apparatuses, storage media, modules, and units described herein may be implemented in the special-purpose computing devices, or one or more computing chips of the one or more special-purpose computing devices. In some embodiments, the instructions described herein may be implemented in a virtual machine on the special-purpose computing device. When executed, the instructions may cause the special-purpose computing device to perform various methods described herein. The virtual machine may include a software, hardware, or a combination thereof.

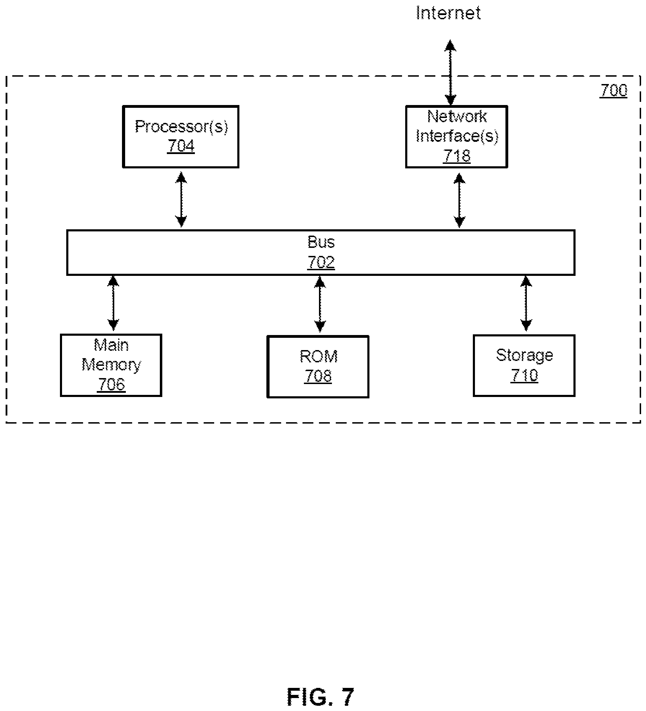

FIG. 7 is a block diagram that illustrates a computer system 700 upon which any of the embodiments described herein may be implemented. The system 700 may perform any of the methods described herein (e.g., the method 510 for implementing blockchain-based private transactions). The system 700 may be implemented in any of the systems described herein (e.g., the system 610 for implementing blockchain-based private transactions). The system 700 may be implemented in any of the nodes described herein and configured to perform corresponding steps for implementing blockchain contracts. The computer system 700 includes a bus 702 or other communication mechanism for communicating information, one or more hardware processor(s) 704 coupled with bus 702 for processing information. Hardware processor(s) 704 may be, for example, one or more general purpose microprocessors.

The computer system 700 also includes a main memory 706, such as a random access memory (RAM), cache and/or other dynamic storage devices, coupled to bus 702 for storing information and instructions executable by processor(s) 704. Main memory 706 also may be used for storing temporary variables or other intermediate information during execution of instructions executable by processor(s) 704. Such instructions, when stored in storage media accessible to processor(s) 704, render computer system 700 into a special-purpose machine that is customized to perform the operations specified in the instructions. The computer system 700 further includes a read only memory (ROM) 708 or other static storage device coupled to bus 702 for storing static information and instructions for processor(s) 704. A storage device 710, such as a magnetic disk, optical disk, or USB thumb drive (Flash drive), etc., is provided and coupled to bus 702 for storing information and instructions.

The computer system 700 may implement the techniques described herein using customized hard-wired logic, one or more ASICs or FPGAs, firmware and/or program logic which in combination with the computer system causes or programs computer system 700 to be a special-purpose machine. According to one embodiment, the operations, methods, and processes described herein are performed by computer system 700 in response to processor(s) 704 executing one or more sequences of one or more instructions contained in main memory 706. Such instructions may be read into main memory 706 from another storage medium, such as storage device 710. Execution of the sequences of instructions contained in main memory 706 causes processor(s) 704 to perform the process steps described herein. In alternative embodiments, hard-wired circuitry may be used in place of or in combination with software instructions.

The main memory 706, the ROM 708, and/or the storage 710 may include non-transitory storage media. The term "non-transitory media," and similar terms, as used herein refers to media that store data and/or instructions that cause a machine to operate in a specific fashion, the media excludes transitory signals. Such non-transitory media may comprise non-volatile media and/or volatile media. Non-volatile media includes, for example, optical or magnetic disks, such as storage device 710. Volatile media includes dynamic memory, such as main memory 706. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge, and networked versions of the same.

The computer system 700 also includes a network interface 718 coupled to bus 702. Network interface 718 provides a two-way data communication coupling to one or more network links that are connected to one or more local networks. For example, network interface 718 may be an integrated services digital network (ISDN) card, cable modem, satellite modem, or a modem to provide a data communication connection to a corresponding type of telephone line. As another example, network interface 718 may be a local area network (LAN) card to provide a data communication connection to a compatible LAN (or WAN component to communicated with a WAN). Wireless links may also be implemented. In any such implementation, network interface 718 sends and receives electrical, electromagnetic or optical signals that carry digital data streams representing various types of information.

The computer system 700 can send messages and receive data, including program code, through the network(s), network link and network interface 718. In the Internet example, a server might transmit a requested code for an application program through the Internet, the ISP, the local network and the network interface 718.

The received code may be executed by processor(s) 704 as it is received, and/or stored in storage device 710, or other non-volatile storage for later execution.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

The various features and processes described above may be used independently of one another, or may be combined in various ways. All possible combinations and subcombinations are intended to fall within the scope of this specification. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The examples of blocks or states may be performed in serial, in parallel, or in some other manner. Blocks or states may be added to or removed from the disclosed embodiments. The examples of systems and components described herein may be configured differently than described. For example, elements may be added to, removed from, or rearranged compared to the disclosed embodiments.

The various operations of methods described herein may be performed, at least partially, by one or more processors that are temporarily configured (e.g., by software) or permanently configured to perform the relevant operations. Whether temporarily or permanently configured, such processors may constitute processor-implemented engines that operate to perform one or more operations or functions described herein.

Similarly, the methods described herein may be at least partially processor-implemented, with a particular processor or processors being an example of hardware. For example, at least some of the operations of a method may be performed by one or more processors or processor-implemented engines. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an Application Program Interface (API)).

The performance of certain of the operations may be distributed among the processors, not only residing within a single machine, but deployed across a number of machines. In some embodiments, the processors or processor-implemented engines may be located in a single geographic location (e.g., within a home environment, an office environment, or a server farm). In other embodiments, the processors or processor-implemented engines may be distributed across a number of geographic locations.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in configurations may be implemented as a combined structure or component. Similarly, structures and functionality presented as a single component may be implemented as separate components. These and other variations, modifications, additions, and improvements fall within the scope of the subject matter herein. Furthermore, related terms (such as "first," "second," "third," etc.) used herein do not denote any order, height, or importance, but rather are used to distinguish one element from another element. Furthermore, the terms "a," "an," and "plurality" do not denote a limitation of quantity herein, but rather denote the presence of at least one of the articles mentioned.

Although an overview of the subject matter has been described with reference to specific embodiments, various modifications and changes may be made to these embodiments without departing from the broader scope of embodiments of the this specification. The Detailed Description should not to be taken in a limiting sense, and the scope of various embodiments is defined only by the appended claims, along with the full range of equivalents to which such claims are entitled.

## Claims

1. A computer-implemented method (510) for implementing blockchain-based private transactions, wherein the method is performed by a first blockchain node of a plurality of blockchain nodes of a public blockchain, wherein the first blockchain node pertains to a private transaction involving a first party and one or more second parties, wherein the first blockchain node is associated with the first party and one or more second blockchain nodes of the plurality of blockchain nodes of the public blockchain are associated with the one or more second parties, the method comprising:
receiving the private transaction for execution among the first party and the one or more second parties, wherein the private transaction comprises transaction information and an identification of a group for executing the private transaction;
determining (511) the one or more second blockchain nodes to the private transaction according to a blockchain contract in the public blockchain, wherein the blockchain contract comprises: 1) the identification of the group, wherein the group comprises each of the first and second blockchain nodes to the private transaction and the identification of the group enables to notify each of the first and second blockchain nodes of an involvement in the private transaction, wherein each of the first and second blockchain nodes belongs to the plurality of blockchain nodes of the public blockchain, 2) an address of each of the first and second blockchain nodes to the private transaction, wherein the address of each of the first and second blockchain nodes comprises an Internet Protocol, IP, address, and 3) a public key associated with each of the first and second blockchain nodes to the private transaction;
wherein determining the one or more second blockchain nodes to the private transaction according to the blockchain contract in the public blockchain comprises determining the one or more second blockchain nodes to the private transaction according to the address of each of the one or more second blockchain nodes to the private transaction;
transmitting (512) the transaction information to the one or more second blockchain nodes, the transaction information comprising one or more senders of the private transaction, one or more recipients of the private transaction, and one or more transaction amounts of the private transaction, the transmitting (512) comprising:
for each of the one or more second blockchain nodes, encrypting the transaction information with the corresponding public key; and
transmitting the encrypted transaction information to each of the one or more second blockchain nodes according to the address of each of the one or more second blockchain nodes;
obtaining (513), from each of a number of the one or more second blockchain nodes, a confirmation of the transaction information represented by a signature certifying receipt of the transaction information; and
in response to determining that the obtained number of the signatures is above a threshold, storing (514) at least a representation of the private transaction and the signatures in the public blockchain.

2. The method of any preceding claim, wherein the signature from each of the number of the one or more second blockchain nodes certifying receipt of the transaction information comprises:
a hash value of the transaction information encrypted with a private key associated with each of the number of the one or more second blockchain nodes.

3. The method of any preceding claim, further comprising:
executing the private transaction locally.

4. The method of any preceding claim, further comprising:
obtaining a request for the transaction information from one of the one or more second blockchain nodes that has verified the number of signatures and has not received the transaction information; and
transmitting the transaction information to the one second blockchain node for the one second blockchain node to execute the private transaction locally.

5. The method of any preceding claim, wherein before receiving the private transaction for execution among the first party and the one or more second parties, the method further comprises:
storing blockchain node information in the public blockchain, the blockchain node information comprising the public key of each of the first and second blockchain nodes to the private transaction and the address of each of the first and second blockchain nodes,
wherein storing the blockchain node information in the public blockchain comprises:
transmitting a first blockchain transaction comprising the blockchain contract to one or more blockchain nodes of the public blockchain for deploying the blockchain contract in the public blockchain; and
transmitting one or more second blockchain transactions to one or more blockchain nodes of the public blockchain for invoking the deployed blockchain contract to store the blockchain node information in the deployed blockchain contract.

6. The method of claim 5, wherein:
the deployed blockchain contract is configured to bar changes to each of the first and second blockchain nodes to the private transaction after the blockchain node information is stored in the deployed blockchain contract.

7. The method of any preceding claim, wherein storing (514) at least the representation of the private transaction and the signatures in the public blockchain comprises:
transmitting a third blockchain transaction comprising a transaction hash of the private transaction and the signatures to one or more blockchain nodes of the public blockchain for packing into the public blockchain, wherein the transaction hash is a hash value of at least the transaction information.

8. The method of any preceding claim, wherein, in response to determining that the obtained number of the signatures is above a threshold, storing at least the representation of the private transaction and the signatures in the public blockchain comprises:
in response to respectively obtaining signatures of all of the second blockchain nodes to the private transaction, storing at least the representation of the private transaction and the signatures in the public blockchain.

9. An apparatus (610) for implementing blockchain-based private transactions, comprising a plurality of modules (611-614) for performing the method of any of claims 1 to 8.

10. A non-transitory computer-readable medium (706, 708, 710) having stored therein instructions that, when executed by a processor (704) of a device (700), cause the device (700) to perform the method of any of claims 1 to 8.

## Patentansprüche

1. Computerimplementiertes Verfahren (510) zum Implementieren von privaten Transaktionen auf Blockchain-Basis, wobei das Verfahren durch einen ersten Blockchain-Knoten von mehreren Blockchain-Knoten einer öffentlichen Blockchain durchgeführt wird, wobei der erste Blockchain-Knoten zu einer privaten Transaktion gehört, die eine erste Partei und eine oder mehrere zweite Parteien betrifft, wobei der erste Blockchain-Knoten der ersten Partei zugeordnet ist und einer oder mehrere Blockchain-Knoten der mehreren Blockchain-Knoten der öffentlichen Blockchain der einen oder mehreren zweiten Parteien zugeordnet sind, wobei das Verfahren Folgendes umfasst:
Empfangen der privaten Transaktion zur Ausführung zwischen der ersten Partei und der einen oder der mehreren zweiten Parteien, wobei die private Transaktion Transaktionsinformationen und eine Identifizierung einer Gruppe zum Ausführen der privaten Transaktion umfasst;
Bestimmen (511) des einen oder der mehreren zweiten Blockchain-Knoten zu der privaten Transaktion gemäß einem Blockchain-Vertrag in der öffentlichen Blockchain, wobei der Blockchain-Vertrag Folgendes umfasst: 1) die Identifizierung der Gruppe, wobei die Gruppe den ersten und den zweiten Blockchain-Knoten zu der privaten Transaktion umfasst und die Identifizierung der Gruppe ermöglicht, den ersten und den zweiten Blockchain-Knoten über eine Beteiligung in der privaten Transaktion zu benachrichtigen, wobei der erste und der zweite Blockchain-Knoten zu den mehreren Blockchain-Knoten der öffentlichen Blockchain gehören, 2) eine Adresse des ersten und des zweiten Blockchain-Knotens zu der privaten Transaktion, wobei die Adresse des ersten und des zweiten Blockchain-Knotens eine Adresse des Internetprotokolls, IPs, umfasst, und 3) einen öffentlichen Schlüssel, der dem ersten und dem zweiten Blockchain-Knoten zu der privaten Transaktion zugeordnet ist;
wobei das Bestimmen des einen oder der mehreren zweiten Blockchain-Knoten zu der privaten Transaktion gemäß dem Blockchain-Vertrag in der öffentlichen Blockchain Folgendes umfasst: Bestimmen des einen oder der mehreren Blockchain-Knoten zu der privaten Transaktion gemäß der Adresse des einen oder der mehreren zweiten Blockchain-Knoten zu der privaten Transaktion;
Übermitteln (512) der Transaktionsinformationen an den einen oder die mehreren zweiten Blockchain-Knoten, wobei die Transaktionsinformationen einen oder mehrere Sender der privaten Transaktion, einen oder mehrere Empfänger der privaten Transaktion und eine oder mehrere Transaktionsbeträge der privaten Transaktion umfassen, wobei das Übermitteln (512) Folgendes umfasst:
für jeden des einen oder der mehreren zweiten Blockchain-Knoten Verschlüsseln der Transaktionsinformationen mit dem entsprechenden öffentlichen Schlüssel und
Übermitteln der verschlüsselten Transaktionsinformationen an jeden des einen oder der mehreren zweiten Blockchain-Knoten gemäß der Adresse von jedem des einen oder der mehreren Blockchain-Knoten;
Erhalten (513) einer Bestätigung der Transaktionsinformationen, die durch einen signaturzertifizierenden Empfang der Transaktionsinformationen repräsentiert ist, von jeder einer Anzahl der einen oder mehreren zweiten Blockchain-Knoten und
als Antwort auf das Bestimmen, dass die erhaltene Anzahl der Signaturen über einem Schwellenwert liegt, Speichern (514) mindestens einer Repräsentation der privaten Transaktion und der Signaturen in der öffentlichen Blockchain.

2. Verfahren nach dem vorhergehenden Anspruch, wobei die Signatur von jedem der Anzahl des einen oder der mehreren zweiten Blockchain-Knoten, die den Empfang der Transaktionsinformationen zertifiziert, Folgendes umfasst:
einen Hash-Wert der Transaktionsinformationen, der mit einem privaten Schlüssel verschlüsselt ist, der jedem der Anzahl des einen oder der mehreren zweiten Blockchain-Knoten zugeordnet ist.

3. Verfahren nach einem der vorhergehenden Ansprüche, das ferner Folgendes umfasst:
lokales Ausführen der privaten Transaktion.

4. Verfahren nach einem der vorhergehenden Ansprüche, das ferner Folgendes umfasst:
Erhalten einer Anforderung der Transaktionsinformationen von einem des einen oder der mehreren zweiten Blockchain-Knoten, der die Anzahl von Signaturen verifiziert hat und die Transaktionsinformationen nicht empfangen hat, und
Übermitteln der Transaktionsinformationen an den einen zweiten Blockchain-Knoten, damit der eine zweite Blockchain-Knoten die private Transaktion lokal ausführen kann.

5. Verfahren nach einem der vorhergehenden Ansprüche, wobei vor dem Empfangen der privaten Transaktion zur Ausführung unter der ersten Partei und der einen oder den mehreren zweiten Parteien das Verfahren ferner Folgendes umfasst:
Speichern von Blockchain-Knoteninformationen in der öffentlichen Blockchain, wobei die Blockchain-Knoteninformationen den öffentlichen Schlüssel von dem ersten und dem zweiten Blockchain-Knoten zu der privaten Transaktion und die Adresse des ersten und des zweiten Blockchain-Knotens umfassen,
wobei das Speichern der Blockchain-Knoteninformationen in der öffentlichen Blockchain Folgendes umfasst:
Übermitteln einer ersten Blockchain-Transaktion, die den Blockchain-Vertrag umfasst, an einen oder mehrere Blockchain-Knoten der öffentlichen Blockchain zum Einsetzen des Blockchain-Vertrags in der öffentlichen Blockchain und
Übermitteln der einen oder mehreren zweiten Blockchain-Transaktionen an einen oder mehrere Blockchain-Knoten der öffentlichen Blockchain zum Aufrufen des eingesetzten Blockchain-Vertrages, um die Blockchain-Knoteninformationen in dem eingesetzten Blockchain-Vertrag zu speichern.

6. Verfahren nach Anspruch 5, wobei:
der eingesetzte Blockchain-Vertrag konfiguriert ist, Änderungen an dem ersten und dem zweiten Blockchain-Knoten zu der privaten Transaktion auszuschließen, nachdem die Blockchain-Knoteninformationen in dem eingesetzten Blockchain-Vertrag gespeichert sind.

7. Verfahren nach einem der vorhergehenden Ansprüche, wobei das Speichern (514) mindestens der Repräsentation der privaten Transaktion und der Signaturen in der öffentlichen Blockchain Folgendes umfasst:
Übermitteln einer dritten Blockchain-Transaktion, die einen Transaktions-Hash der privaten Transaktion und die Signaturen umfasst, an einen oder mehrere Blockchain-Knoten der öffentlichen Blockchain zum Eingliedern in die öffentliche Blockchain, wobei der Transaktions-Hash ein Hash-Wert mindestens der Transaktionsinformationen ist.

8. Verfahren nach einem der vorhergehenden Ansprüche, wobei als Antwort auf das Bestimmen, dass die erhaltene Anzahl von Signaturen über einem Schwellenwert liegt, das Speichern von mindestens der Repräsentation der privaten Transaktion und der Signaturen in der öffentlichen Blockchain Folgendes umfasst:
als Antwort auf das jeweilige Erhalten von Signaturen von allen zweiten Blockchain-Knoten zu der privaten Transaktion Speichern mindestens der Repräsentation der privaten Transaktion und der Signaturen in der öffentlichen Blockchain.

9. Einrichtung (610) zum Implementieren von privaten Transaktionen auf Blockchain-Basis, die mehrere Module (611-614) zum Durchführen des Verfahrens nach einem der Ansprüche 1 bis 8 umfasst.

10. Nichtflüchtiges computerlesbares Medium (706, 708, 710), das darin gespeicherte Anweisungen aufweist, die dann, wenn sie durch einen Prozessor (704) einer Vorrichtung (700) ausgeführt werden, bewirken, dass die Vorrichtung (700) das Verfahren nach einem der Ansprüche 1 bis 8 ausführt.

## Revendications

1. Procédé mis en œuvre par ordinateur (510) pour la mise en œuvre de transactions privées à base de chaîne de blocs, le procédé étant réalisé par un premier nœud de chaîne de blocs d'une pluralité de nœuds de chaîne de blocs d'une chaîne de blocs publique, dans lequel le premier nœud de chaîne de blocs appartient à une transaction privée impliquant une première partie et une ou plusieurs secondes parties, dans lequel le premier nœud de chaîne de blocs est associé à la première partie et un ou plusieurs seconds nœuds de chaîne de blocs de la pluralité de nœuds de chaîne de blocs de la chaîne de blocs publique sont associés aux une ou plusieurs secondes parties, le procédé comprenant :
la réception de la transaction privée en vue de son exécution entre la première partie et les une ou plusieurs secondes parties, la transaction privée comprenant des informations de transaction et une identification d'un groupe pour l'exécution de la transaction privée ;
la détermination (511) des un ou plusieurs seconds nœuds de chaîne de blocs relatifs à la transaction privée conformément à un contrat de chaîne de blocs dans la chaîne de blocs publique, le contrat de chaîne de blocs comprenant : 1) l'identification du groupe, le groupe comprenant chacun des premier et second nœuds de chaîne de blocs relatifs à la transaction privée et l'identification du groupe permettant de notifier à chacun des premier et second nœuds de chaîne de blocs une implication dans la transaction privée, chacun des premier et second nœuds de chaîne de blocs appartenant à la pluralité de nœuds de chaîne de blocs de la chaîne de blocs publique, 2) une adresse de chacun des premier et second nœuds de chaîne de blocs relatifs à la transaction privée, l'adresse de chacun des premier et second nœuds de chaîne de blocs comprenant une adresse de protocole Internet, IP, et 3) une clé publique associée à chacun des premier et second nœuds de chaîne de blocs relatifs la transaction privée ;
dans lequel la détermination des un ou plusieurs seconds nœuds de chaîne de blocs relatifs à la transaction privée conformément au contrat de chaîne de blocs dans la chaîne de blocs publique comprend la détermination des un ou plusieurs seconds nœuds de chaîne de blocs relatifs à la transaction privée en fonction de l'adresse de chacun des un ou plusieurs seconds nœuds de chaîne de blocs relatifs à la transaction privée ;
la transmission (512) des informations de transaction aux un ou plusieurs seconds nœuds de chaîne de blocs, les informations de transaction comprenant un ou plusieurs expéditeurs de la transaction privée, un ou plusieurs destinataires de la transaction privée, et un ou plusieurs montants de transaction de la transaction privée, la transmission (512) comprenant :
pour chacun des un ou plusieurs seconds nœuds de chaîne de blocs, le cryptage des informations de transaction avec la clé publique correspondante ; et
la transmission des informations de transaction cryptées à chacun des un ou plusieurs seconds nœuds de chaîne de blocs en fonction de l'adresse de chacun des un ou plusieurs seconds nœuds de chaîne de blocs ;
l'obtention (513), à partir de chacun des un ou plusieurs seconds nœuds de chaîne de blocs, d'une confirmation des informations de transaction représentées par une signature certifiant la réception des informations de transaction ; et
en réponse à la détermination que le nombre de signatures obtenues est supérieur à un seuil, la mémorisation (514) d'au moins une représentation de la transaction privée et des signatures dans la chaîne de blocs publique.

2. Procédé selon n'importe quelle revendication précédente, dans lequel la signature de chaque nœud du nombre des un ou plusieurs seconds nœuds de chaîne de blocs certifiant la réception des informations de transaction comprend :
une valeur de hachage des informations de transaction cryptées avec une clé privée associée à chaque nœud du nombre des un ou plusieurs seconds nœuds de chaîne de blocs.

3. Procédé selon n'importe quelle revendication précédente, comprenant en outre :
l'exécution locale de la transaction privée.

4. Procédé selon n'importe quelle revendication précédente, comprenant en outre :
l'obtention d'une demande d'informations de transaction à partir d'un des un ou plusieurs seconds nœuds de chaîne de blocs qui a vérifié le nombre de signatures et n'a pas reçu les informations de transaction ; et
la transmission des informations de transaction au second nœud de chaîne de blocs pour permettre au second nœud de chaîne de blocs d'exécuter localement la transaction privée.

5. Procédé selon n'importe quelle revendication précédente, le procédé comprenant en outre, avant la réception de la transaction privée en vue de son exécution entre la première partie et les une ou plusieurs secondes parties :
la mémorisation d'informations de nœuds de chaîne de blocs dans la chaîne de blocs publique, les informations de nœuds de chaîne de blocs comprenant la clé publique de chacun des premier et second nœuds de chaîne de blocs relatifs à la transaction privée et l'adresse de chacun des premier et second nœuds de chaîne de blocs,
dans lequel la mémorisation des informations de nœuds de chaîne de blocs dans la chaîne de blocs publique comprend :
la transmission d'une première transaction de chaîne de blocs comprenant le contrat de chaîne de blocs à un ou plusieurs nœuds de chaîne de blocs de la chaîne de blocs publique pour déployer le contrat de chaîne de blocs dans la chaîne de blocs publique ; et
la transmission d'une ou plusieurs deuxièmes transactions de chaîne de blocs à un ou plusieurs nœuds de chaîne de blocs de la chaîne de blocs publique afin d'appeler le contrat de chaîne de blocs déployé pour mémoriser les informations de nœuds de chaîne de blocs dans le contrat de chaîne de blocs déployé.

6. Procédé selon la revendication 5, dans lequel :
le contrat de chaîne de blocs déployé est configuré pour interdire l'apport de modifications à chacun des premier et second nœuds de chaîne de blocs relatifs à la transaction privée une fois que les informations de nœuds de chaîne de blocs ont été mémorisées dans le contrat de chaîne de blocs déployé.

7. Procédé selon n'importe quelle revendication précédente, dans lequel la mémorisation (514) au moins de la représentation de la transaction privée et des signatures dans la chaîne de blocs publique comprend :
la transmission d'une troisième transaction de chaîne de blocs comprenant une valeur de hachage de transaction de la transaction privée et les signatures à un ou plusieurs nœuds de chaîne de blocs de la chaîne de blocs publique pour les intégrer dans la chaîne de blocs publique, la valeur de hachage de transaction étant une valeur de hachage au moins des informations de transaction.

8. Procédé selon n'importe quelle revendication précédente, dans lequel, en réponse à la détermination que le nombre obtenu des signatures est supérieur à un seuil, la mémorisation au moins de la représentation de la transaction privée et des signatures dans la chaîne de blocs publique comprend :
en réponse à l'obtention respective de signatures de tous les seconds nœuds de chaîne de blocs relatifs à la transaction privée, la mémorisation au moins de la représentation de la transaction privée et des signatures dans la chaîne de blocs publique.

9. Appareil (610) pour la mise en œuvre de transactions privées à base de chaîne de blocs, comprenant une pluralité de modules (611-614) pour réaliser le procédé selon l'une quelconque des revendications 1 à 8.

10. Support non transitoire lisible par ordinateur (706, 708, 710) sur lequel sont mémorisées des instructions qui, à leur exécution par un processeur (704) d'un dispositif (700), amènent le dispositif (700) à réaliser le procédé selon l'une quelconque des revendications 1 à 8.
